# FASCICULE DE BREVET EUROPEEN

(11) **EP 2 707 202 B1**
(45) Date de publication et mention de la délivrance du brevet: **27.04.2016**
(21) Numéro de dépôt: 12731022.5
(22) Date de dépôt: 07.05.2012
(51) Int. Cl.: B29D 30/42

(54) **PROCÉDÉ ET DISPOSITIF POUR LA RÉALISATION D'UNE NAPPE CARCASSE DE PNEUMATIQUE**
VERFAHREN UND VORRICHTUNG ZUR HERSTELLUNG EINER REIFENKARKASSENLAGE
METHOD AND APPARATUS FOR PRODUCING A TYRE CARCASS PLY

(30) Priorité: 10.05.2011 FR 1154007
(43) Date de publication de la demande: 19.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LACOUTURE, Guy, F-63040 Clermont-ferrand Cedex 9 (FR); PERRICHOT, Nicolas, F-63040 Clermont-ferrand Cedex 9 (FR); VILMUS, Philippe, F-63040 Clermont-ferrand Cedex 9 (FR); HERBRETEAU, Rémi, F-63040 Clermont-ferrand Cedex 9 (FR)
(74) Mandataire: Noel, Luminita
(86) Numéro de dépôt international: PCT/FR2012/051010
(87) Numéro de publication internationale: WO 2012/153055

(56) Documents cités:
- GB-A- 2 318 082
- US-A- 4 088 527
- US-A- 4 793 890
- US-A- 4 867 823
- US-A- 5 228 941
- US-A1- 2008 017 297
- US-A1- 2010 212 836
- US-B1- 6 533 891

## Description

L'invention concerne les pneumatiques de véhicules.

Un pneumatique de type radial, en particulier lorsqu'il est prévu pour un poids lourd, comprend généralement un composant appelé nappe carcasse. Il est formé d'une matrice de gomme renforcée par des torons constitués de fils métalliques torsadés s'étendant chacun dans un plan radial à l'axe du pneumatique. Les torons sont disposés en une couche les uns à la suite des autres. La distance séparant les torons successifs est constante. Ce constituant est l'un de ceux qui forment la base de l'architecture d'un pneumatique de type radial.

Lors de la fabrication du pneumatique, la nappe carcasse, initialement dans une configuration plane, est enroulée sur un tambour sur lequel elle prend une forme annulaire. Un opérateur relie ensuite manuellement l'une à l'autre les deux extrémités de la nappe de sorte que cette liaison soit transparente vis à vis de la qualité et des performances du pneumatique. En d'autres termes, les torons situés aux extrémités doivent être séparés l'un de l'autre d'une distance identique à celle séparant les autres torons afin que cette distance demeure constante sur toute la circonférence du pneumatique.

Le document US 5228941 - A divulgue un procédé de réalisation d'une nappe carcasse (4) de pneumatique de véhicule, dans lequel procédé la nappe (4) est enroulée sur un tambour (2) et comprend des renforts s'étendant dans des plans radiaux à un axe (3) du tambour (2).

Au moins un organe d'assemblage (11) monté mobile par rapport au tambour rapproche des extrémités (4a, 4b) de la nappe (4) et les assemble tout en parcourant la nappe suivant une direction (3) parallèle aux extrémités (4a, 4b).

Le même document divulgue aussi un dispositif de fabrication d'une nappe (4) carcasse de pneumatique de véhicule, ledit dispositif comprenant:
- un tambour (2),
- au moins un organe d'assemblage (11) comprenant:
- au moins une paire de molettes (75) montées rotatives autour d'axes respectifs sécants définissant un plan parallèle à l'axe (3) du tambour (2) et
- des moyens (6) aptes à guider l'organe d'assemblage (11) à coulissement par rapport au tambour (2) parallèlement à un axe (3) du tambour.

Un but de l'invention est d'automatiser la réalisation de la nappe carcasse.

A cet effet, on prévoit selon l'invention un procédé comme défini dans la revendication 1, pour la réalisation d'une nappe carcasse de pneumatique de véhicule, dans lequel, la nappe étant enroulée sur un tambour et comprenant des renforts s'étendant dans des plans radiaux à un axe du tambour, au moins un organe d'assemblage monté mobile par rapport au tambour rapproche des extrémités de la nappe et les assemble tout en parcourant la nappe suivant une direction parallèle aux extrémités, et dans lequel, avant l'assemblage, une palette indépendante du ou de chaque organe d'assemblage s'étend entre le tambour et les extrémités sans s'étendre entre le tambour et le reste de la nappe.

Ainsi, l'organe assemble les extrémités de façon progressive en les parcourant longitudinalement. Le procédé procure un aboutage automatisé et fiable des extrémités assurant une bonne fixation de l'une à l'autre et le respect des impératifs dimensionnels.

De plus, la palette permet l'introduction de l'organe d'assemblage dans l'espace situé entre la nappe et le tambour sans forcer et sans risquer d'abîmer la nappe. On rappelle que la gomme de la nappe à ce stade est encore à l'état plastique et non élastique et donc facilement déformable et altérable.

Avantageusement, on dispose la palette sur le tambour et on enroule la nappe sur la palette et le tambour.

Il s'agit d'une façon particulièrement simple de réaliser l'interposition de la palette entre la nappe et le tambour.

De préférence, on introduit la palette suivant une direction circonférentielle à l'axe du tambour entre le tambour et une extrémité de la nappe enroulée sur le tambour.

Avantageusement, avant l'assemblage, on éloigne les extrémités par rapport au tambour, notamment par rapport à la palette, suivant une direction radiale à l'axe du tambour par des moyens distincts du ou de chaque organe d'assemblage.

Ainsi, on facilite la mise en place de l'organe d'assemblage par rapport à la nappe et on évite de générer des sollicitations dans la nappe susceptibles de la déformer.

Avantageusement, durant l'assemblage, on maintient les extrémités éloignées du tambour, notamment de la palette, suivant une direction radiale à l'axe du tambour par des moyens distincts du ou de chaque organe d'assemblage.

Ce maintien facilite l'action de l'organe d'assemblage, en particulier son déplacement qui peut se faire à distance du tambour, et évite de générer des sollicitations dans la nappe.

De préférence, on effectue le maintien au moyen d'au moins un aimant et on déplace le ou chaque aimant qui assure le maintien pour dégager un accès à l'organe d'assemblage pour les extrémités.

Ainsi, le cas échéant, on tire parti du fait que la nappe comprend des renforts métalliques qui peuvent coopérer avec l'aimant. Le dégagement évite d'altérer la nappe par le frottement au contact de l'aimant.

De préférence, les organes d'assemblage sont au nombre de deux et l'un d'eux est immobile par rapport au tambour et maintient la nappe pendant que l'autre effectue l'assemblage.

Ainsi, le maintien de la nappe par l'un des organes facilite l'assemblage des extrémités par l'autre.

De préférence, lors de l'assemblage, l'organe d'assemblage ou l'un des organes d'assemblage parcourt la nappe :
- à partir d'une première position dans un premier sens jusqu'à une deuxième position, et
- à partir d'une troisième position située entre les première et deuxième positions dans un deuxième sens jusqu'à une quatrième position telle que la première position s'étend entre les troisième et quatrième positions.

Ainsi, chacun des organes effectue une fraction de l'assemblage sur des portions différentes des extrémités et dans des sens différents, ce qui permet d'éviter l'apparition de déformations dans la nappe en équilibrant les sollicitations qui y sont engendrées.

De préférence, lors de l'assemblage, l'organe d'assemblage ou l'un des organes d'assemblage parcourt la nappe :
- à partir de la deuxième position jusqu'à un bord distal des extrémités, et
- à partir de la quatrième position jusqu'à un bord proximal des extrémités.

On prévoit également selon l'invention un procédé de réalisation d'un pneumatique qui met en oeuvre un procédé selon l'invention.

On prévoit aussi selon l'invention un dispositif comme défini dans la revendication 11, pour la fabrication d'une nappe carcasse de pneumatique de véhicule, qui comprend un tambour, au moins un organe d'assemblage comprenant au moins une paire de molettes montées rotatives autour d'axes respectifs sécants définissant un plan parallèle à l'axe du tambour, des moyens aptes à guider l'organe d'assemblage à coulissement par rapport au tambour parallèlement à un axe du tambour et une palette montée mobile par rapport au tambour indépendamment du ou de chaque organe d'assemblage.

Ce dispositif permet la mise en oeuvre du procédé de l'invention.

Avantageusement, la palette a une face concave présentant une courbure identique à une courbure du tambour.

Ainsi on peut appliquer la palette contre la face externe du tambour.

De préférence, la palette présente une face de base et au moins une face de support toutes deux orientées en direction opposée à l'axe, la face de support étant située plus loin de l'axe que la face de base.

La ou les faces de support permettent à la palette de supporter les extrémités de la nappe à distance de la face de base, pour faciliter l'introduction des organes d'assemblage sous la nappe.

Avantageusement, la face de support présente une arête commune avec la face concave.

On peut ainsi aisément introduire la palette suivant la direction circonférentielle à l'axe du tambour entre le tambour et une extrémité de la nappe enroulée sur le tambour.

De préférence, la palette comprend au moins un organe monté rotatif sur une base de la palette et formant la face de support ou l'une des faces de support.

Un tel organe roule contre la nappe lors de l'enroulement de la nappe sur le tambour et la supporte donc sans risquer de l'abîmer.

Avantageusement, les faces de support sont au nombre de deux et séparées l'une de l'autre par un espace libre en direction circonférentielle à l'axe.

Cet espace facilite l'introduction des organes d'assemblage sous la nappe.

De préférence, le dispositif comprend des moyens, distincts du ou de chaque organe d'assemblage, pour éloigner des extrémités d'une nappe carcasse enroulée sur le tambour par rapport au tambour, notamment par rapport à la palette, suivant une direction radiale à l'axe.

Dans un mode de réalisation, les moyens d'éloignement comprennent des moyens de projection d'air, notamment à partir de la palette.

On peut ainsi facilement éloigner les extrémités de la nappe à l'égard du tambour, voire de la palette. Cela évite d'augmenter la capacité des aimants éventuels si bien que la sollicitation qu'ils génèrent une fois les extrémités en position haute n'engendre pas de déformation ou de frottement inutile dans la nappe.

Avantageusement, le dispositif comprend des moyens, distincts du ou de chaque organe d'assemblage, pour maintenir des extrémités d'une nappe carcasse enroulée sur le tambour éloignées du tambour, notamment de la palette, suivant une direction radiale à l'axe.

Dans un mode de réalisation, les moyens d'éloignement et/ou de maintien comprennent au moins un aimant.

Avantageusement, le ou chaque aimant est porté par l'organe d'assemblage ou l'un des organes d'assemblage.

Ainsi, l'aimant assure le maintien des extrémités en position haute au voisinage de l'organe d'assemblage quelle que soit la position de ce dernier au cours de son mouvement.

De préférence, le ou chaque aimant est monté mobile par rapport à un corps de l'organe d'assemblage entre une première position et une deuxième position plus éloignée des molettes que la première position.

Ainsi, on peut prévoir que, dans la première position, les aimants sont aptes à solliciter les extrémités pour leur faire achever leur trajectoire d'éloignement tandis que, dans la deuxième position, ils permettent simplement de maintenir ces extrémités en position haute. Dans la deuxième position, les aimants dégagent l'accès aux extrémités de la nappe pour l'organe d'assemblage. On évite ainsi de générer des frottements entre la nappe et les aimants lors de la fermeture.

Le dispositif pourra en outre présenter au moins l'une quelconque des caractéristiques suivantes:
- les paires de molettes sont au nombre de deux dans le ou chaque organe d'assemblage et s'étendent en regard l'une de l'autre, de préférence en étant montées mobiles l'une par rapport à l'autre ;
- les organes d'assemblage sont au moins au nombre de deux et montés mobiles par rapport au tambour parallèlement à l'axe indépendamment l'un de l'autre ; et
- l'organe d'assemblage ou l'un au moins des organes d'assemblage comprend deux mors distincts des molettes. Des formes préferentielles de l'invention sont définies dans les revendications dépendantes.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en perspective avec arrachement partiel d'un pneumatique fabriqué au moyen du procédé de l'invention ;
- la figure 2 est une vue partielle en coupe d'une partie de la nappe du pneumatique de la figure 1 ;
- la figure 3 est une vue illustrant le principe de l'enroulement de la nappe sur le tambour ;
- les figures 4 à 6 sont des vues en perspective du dispositif du présent mode de réalisation de l'invention ;
- la figure 7 est une vue en élévation du dispositif de la figure 4 ;
- les figures 8 à 11 illustrent trois étapes du positionnement de la palette sur le tambour lors de la mise en oeuvre du procédé ;
- les figures 12 à 14 illustrent trois étapes respectives de l'enroulement de la nappe sur le tambour dans le procédé de l'invention ;
- la figure 15 est une vue en perspective de la nappe illustrée à la figure 14 sur le tambour ;
- la figure 16 est une vue à plus grande échelle du détail D de la figure 15 ;
- les figures 17 à 22 illustrent plusieurs étapes successives de la mise en oeuvre du procédé ;
- la figure 23 illustre les trajectoires des organes d'assemblage dans le procédé ;
- les figures 24 à 27 sont des vues respectivement en élévation, en section suivant le plan XXV-XXV, et en plan du dispositif, illustrant une autre étape du procédé ;
- la figure 28 présente deux états de l'un des organes d'assemblage du dispositif de la figure 4 ;
- les figures 29 à 31 sont des vues de face, de côté et en coupe suivant le plan XXXI-XXXI de l'autre organe d'assemblage du dispositif de la figure 4 ; et
- les figures 32 à 34 sont des vues analogues aux figures 29 à 31 montrant l'organe dans un deuxième état.

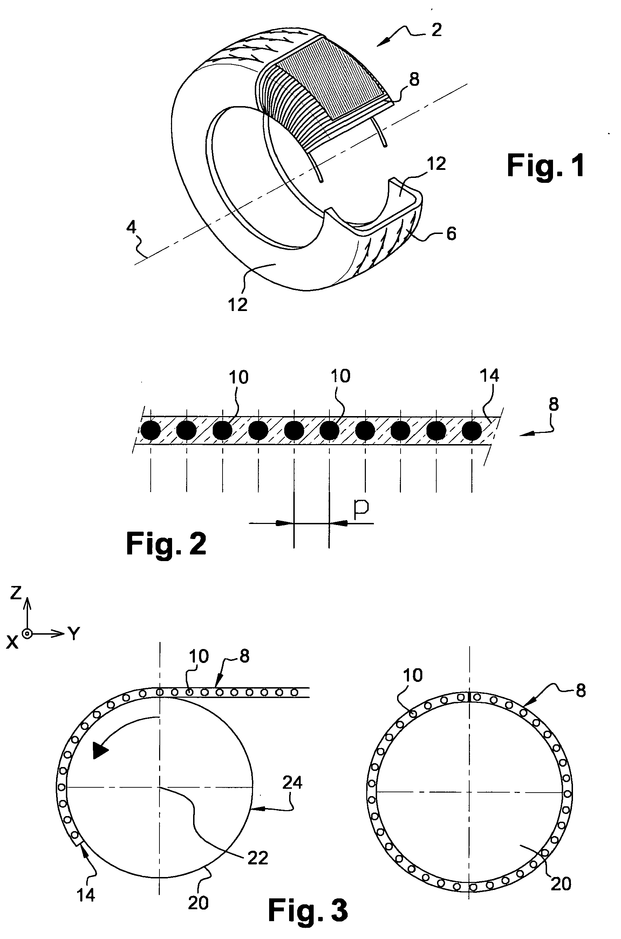

On a illustré à la figure 1 un pneumatique 2 de type radial pour une roue de véhicule. Le véhicule est de préférence un véhicule de type poids lourd. Toutefois, l'invention est également applicable aux pneumatiques de véhicules légers, de véhicules de tourisme, de véhicules utilitaires, ou encore d'engins de génie civil.

Le pneumatique a une forme annulaire par référence à un axe principal 4 du pneumatique. Il comprend notamment une bande de roulement 6 de forme générale cylindrique et une nappe carcasse 8 qui a également été illustrée en coupe aux figures 2 et 3. Cette nappe comprend des torons 10 formés en l'espèce par des fils métalliques torsadés. La nappe comprend une matrice 14 en gomme dans laquelle sont noyés les torons et qui forme des faces de la nappe. Au sein du pneumatique, les torons 10 s'étendent dans des plans respectifs radiaux par référence à l'axe 4. La nappe et chaque toron s'étendent dans la bande de roulement ainsi que dans les flancs 12 du pneumatique, chaque toron ayant une forme en « U ». Lorsque la fabrication du pneumatique est achevée, comme illustré à la figure 1, la nappe carcasse se trouve noyée dans la matière du pneumatique sans apparaître sur les faces externe et interne de ce dernier.

Au cours de la fabrication du pneumatique, la nappe se présente, comme illustré aux figures 2 et 3, sous la forme d'une bande déformable, la gomme de la matrice 14 étant encore à l'état plastique et non à l'état élastique qu'elle atteindra après vulcanisation. Comme illustré à la figure 2, lorsque la nappe 8 est disposée sur un support plan, les torons 10 sont dans une configuration rectiligne et s'étendent parallèlement les uns aux autres dans un même plan parallèle aux faces de la nappe. La distance entre les axes des torons successifs est une constante qui correspond à un pas p. La nappe 8 présente deux extrémités longitudinales 14 rectilignes et parallèles aux torons. La nappe a, en plan, une forme rectangulaire.

On définit en l'espèce un repère orthogonal X, Y, Z dans lequel les directions X et Y sont horizontales et la direction Z est verticale en étant orientée vers le haut dans le sens positif.

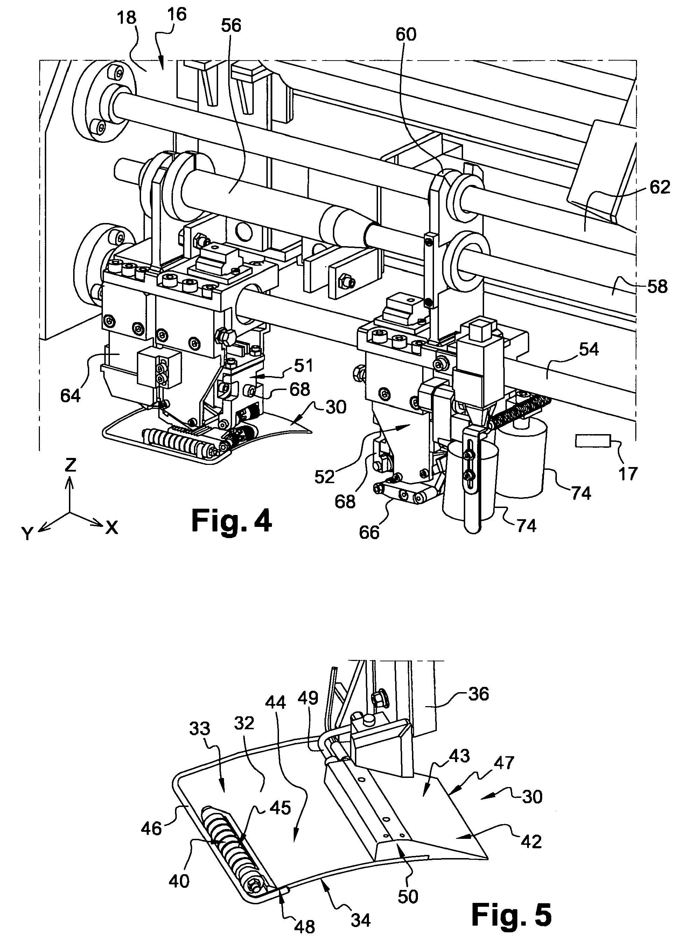

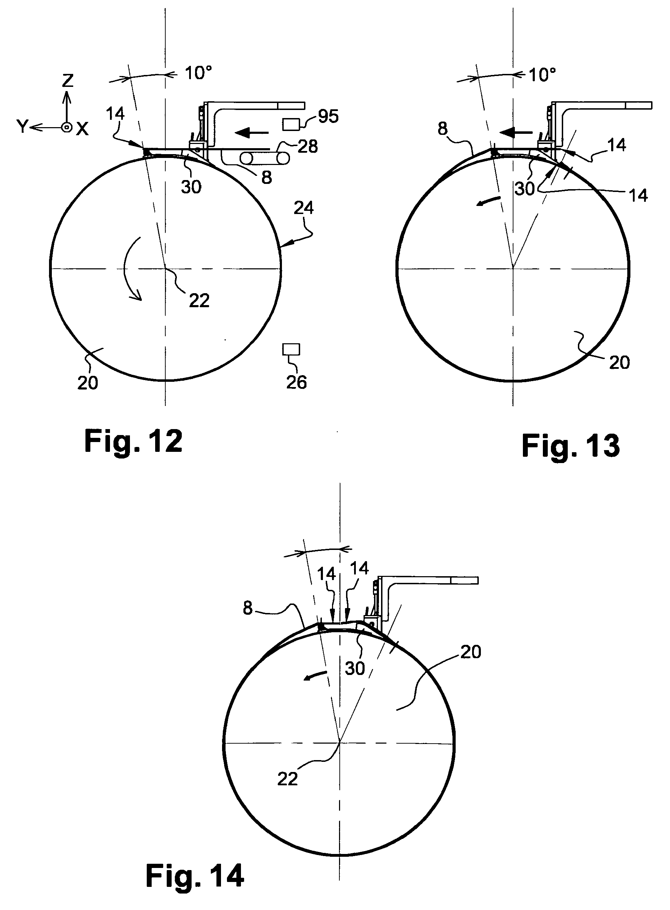

Le dispositif de fabrication 16 du présent mode de réalisation est illustré notamment aux figures 4 à 7. Il comprend un bâti 18 et un tambour 20 d'axe horizontal 22 monté mobile à rotation par rapport au bâti autour de l'axe 22. L'axe 22 est parallèle à la direction X. Le tambour présente une face externe cylindrique 24 présentant une section circulaire dans un plan perpendiculaire à l'axe 22 et destinée à recevoir la nappe 8. Le dispositif 16 comprend un moteur 26 apte à entraîner le tambour en rotation autour de son axe et des moyens pour amener la nappe 8 jusqu'au tambour en vue de son enroulement sur ce dernier. Ces moyens qui n'ont pas été détaillés et sont connus en eux-mêmes comprennent en l'espèce un tapis d'acheminement 28. Ils sont agencés de sorte que la nappe est amenée sur le tambour en s'étendant dans un plan parallèle à un plan tangent au tambour, les torons 10 étant parallèles à l'axe 22. Le tapis 28 et le moteur 26 sont commandés de sorte que la vitesse tangentielle donnée par le tapis à la nappe est égale à la vitesse linéaire à la surface du tambour si bien que la nappe est enroulée sur le tambour comme illustré aux figures 12 à 14 sans subir de sollicitation d'étirement ou de compression. Comme illustré à la figure 3, la nappe est enroulée de sorte que les torons s'étendent parallèlement à l'axe 22 et que, à la fin de l'enroulement, les deux extrémités 14 s'étendent en regard l'une de l'autre et parallèlement l'une à l'autre.

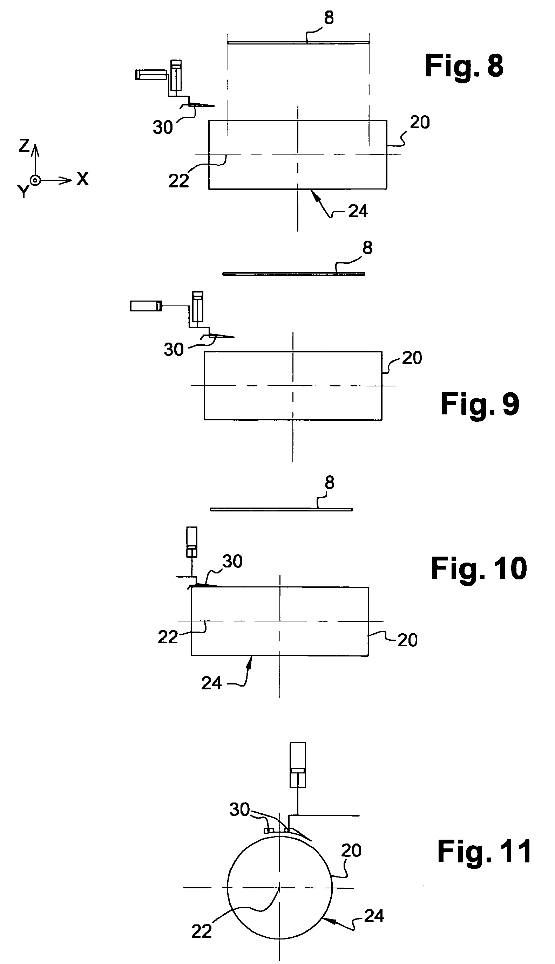

Le dispositif 16 comprend une palette 30 illustrée notamment aux figures 4 et 5, montée mobile par rapport au bâti, notamment au moyen d'une jambe 36, en étant apte à être interposée suivant la direction radiale entre le tambour 24 et la nappe 8, au niveau des extrémités de cette dernière. Comme illustré aux figures 8 à 11, la palette 30 est montée coulissante par rapport au bâti suivant les directions X et Z par des moyens de liaison adaptés.

La palette 30 comprend un corps 32 formé ici par une semelle ayant une forme de secteur de cylindre et dont la face inférieure 34, orientée en direction de l'axe 22, est concave. Cette dernière présente une section circulaire dans un plan perpendiculaire à l'axe du cylindre, dont le rayon de courbure est identique à celui de la face externe 24 du tambour de sorte que la semelle peut être appliquée coaxialement sur le tambour avec les faces 34 et 24 en contact surfacique.

La palette 30 comprend deux supports pour les extrémités de la nappe, s'étendant en saillie d'une face supérieure 33 du corps de la palette suivant une direction radiale à l'axe 22.

Un premier support 40 est formé à une extrémité circonférentielle de la semelle 32 par un organe monté rotatif par rapport au corps et formé en l'espèce par une rangée de roulettes ou de galets coaxiaux dont l'axe est parallèle à l'axe 22. Les galets sont montés fous autour de cet axe. Cet organe présente une face externe cylindrique 45 formant une face de support pour la nappe. La face de support 45 est située plus loin de l'axe que la face supérieure, la face supérieure et une partie de la face 45 étant orientées en direction opposée à l'axe 22.

Un deuxième support 42 est formé à l'autre extrémité circonférentielle de la semelle par une rampe ou marche profilée suivant la direction X et présentant dans un plan perpendiculaire à l'axe 22 une forme généralement triangulaire. La marche présente un épaulement entamant sa face inférieure et dans lequel est inséré un tronçon d'extrémité de la semelle, la marche se poursuivant au-delà de la semelle dans la continuité de la face 34 par une facette cylindrique. La hauteur de la marche va en augmentant de façon régulière à mesure qu'on parcourt cette dernière en direction circonférentielle depuis son bord d'extrémité libre 47 jusqu'à son bord situé dans une zone médiane de la semelle. Ce support 42 présente donc une face de support 43 pour la nappe, face qui a une arête commune avec la face concave de la palette à un bord circonférentiel de cette dernière. La face supérieure 33 et la face de support 43 étant toutes deux orientées en direction opposée à l'axe, la face de support est située plus loin de l'axe que la face supérieure.

Une gorge ou un passage 44 est ménagé au-dessus de la semelle entre les supports 40 et 42, suivant la direction X. Cet espace libre sépare l'une de l'autre les faces de support 43 et 45 en direction circonférentielle à l'axe. La palette comprend en outre en l'espèce des moyens de projection d'air vers le haut suivant la direction Z. Ces moyens comprennent ici un conduit 46 descendant de la jambe 36, longeant un bord arrière et un bord d'extrémité circonférentielle de la semelle et replié sur une partie d'un bord avant de cette dernière d'où émerge un orifice 48 de projection d'air. De même, un autre conduit 49 descend de la jambe 36 et alimente, via une cavité du support 42, un autre orifice 50 ménagé dans une face supérieure de ce dernier.

Lors de la mise en oeuvre du procédé, avant l'arrivée de la nappe 8 sur le tambour 20, les moyens de commande du dispositif déplacent la palette à partir de sa position illustrée à la figure 8. Dans cette position, elle se trouve reculée par rapport au tambour suivant la direction X et surélevée par rapport à ce dernier suivant la direction Z. Les moyens commandent la palette de sorte qu'elle coulisse tout d'abord suivant la direction X pour venir en regard de la face latérale 24 du tambour comme illustré à la figure 9. Ces mêmes moyens commandent ensuite son coulissement suivant la direction Z radiale à l'axe de façon à mettre la face inférieure 34 de la semelle en contact avec la face 24 comme le montre la figure 10. A partir de cette position, ces mêmes moyens commandent finalement une légère remontée de quelques millimètres ou de quelques dixièmes de millimètres de la palette par coulissement suivant la direction Z pour la décoller de la face 24 comme illustré à la figure 11. La palette occupe donc à ce stade une position où elle s'étend en regard de la face 24 au-dessus du tambour mais à distance de ce dernier.

On peut prévoir que, en préalable à ces déplacements de la palette, le dispositif 16 commande un réglage de l'orientation angulaire et/ou de la position du tambour par rapport au bâti pour tenir compte de spécificités dimensionnelles du pneumatique et de la nappe carcasse qui lui est associée.

Les moyens de commande du dispositif 16 commandent ensuite l'arrivée de la nappe 8 à partir du tapis 28 de sorte que la nappe s'enroule progressivement autour du tambour coaxialement à ce dernier comme illustré aux figures 12 à 14.

Cette commande est telle que la nappe 8 arrive au contact de la face 24 du tambour avec une vitesse égale à la vitesse linéaire conférée au tambour par le moteur 26. Au cours de son mouvement, comme illustré à la figure 12, la nappe 8 recouvre tout d'abord la palette 30 en passant au-dessus du support 42 puis du support 40. Une extrémité de la nappe vient au contact de la face 24 de sorte que la nappe s'enroule sur le tambour en rotation. Au cours de ce mouvement, la nappe est supportée par la face 45 des roulettes 40 qui roulent ainsi contre la face interne de la nappe sans l'endommager.

Cette rotation a lieu par exemple sur un angle de 350°. Sachant que la palette demeure fixe par rapport au bâti et que le tambour tourne en entraînant la nappe, l'extrémité avant 14 de celle-ci arrive au niveau du support 42 sur lequel elle glisse et monte pour atteindre finalement la gorge 44. La forme du bord 47 facilite l'introduction de la palette, suivant une direction circonférentielle à l'axe 22, entre le tambour et l'extrémité de la nappe enroulée sur le tambour pour la faire monter sur la palette, la face 43 formant ainsi une rampe.

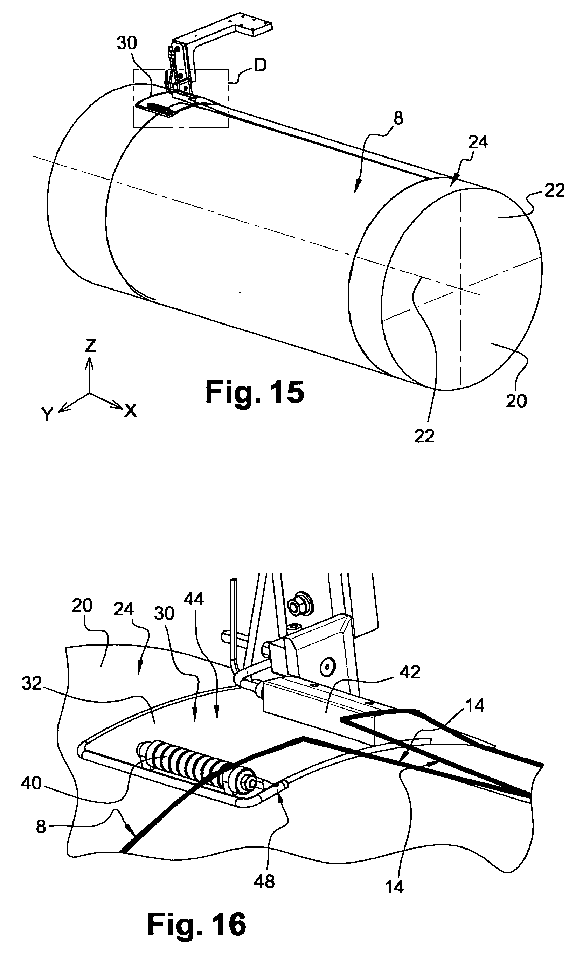

Comme illustré à la figure 14, à l'issue de la mise en place de la nappe sur le tambour, les extrémités 14 s'étendent à distance l'une de l'autre et en regard l'une de l'autre au-dessus de la gorge 44 avec un secteur d'extrémité de la nappe supporté par le support 42 et l'autre par le support 40. Deux coins des extrémités de la nappe sont donc surélevés dans la mesure où la palette se trouve interposée radialement par référence à l'axe 22 entre la nappe et le tambour à leur niveau. Comme illustré aux figures 15 et 16, ce support de la nappe par la palette n'a lieu que sur une fraction de la longueur des extrémités suivant la direction X. Sur tout le reste de cette longueur qui en constitue la plus grande partie, et comme sur le reste de la nappe, la nappe est directement en contact avec la face 24 du tambour avec laquelle elle réalise un contact surfacique.

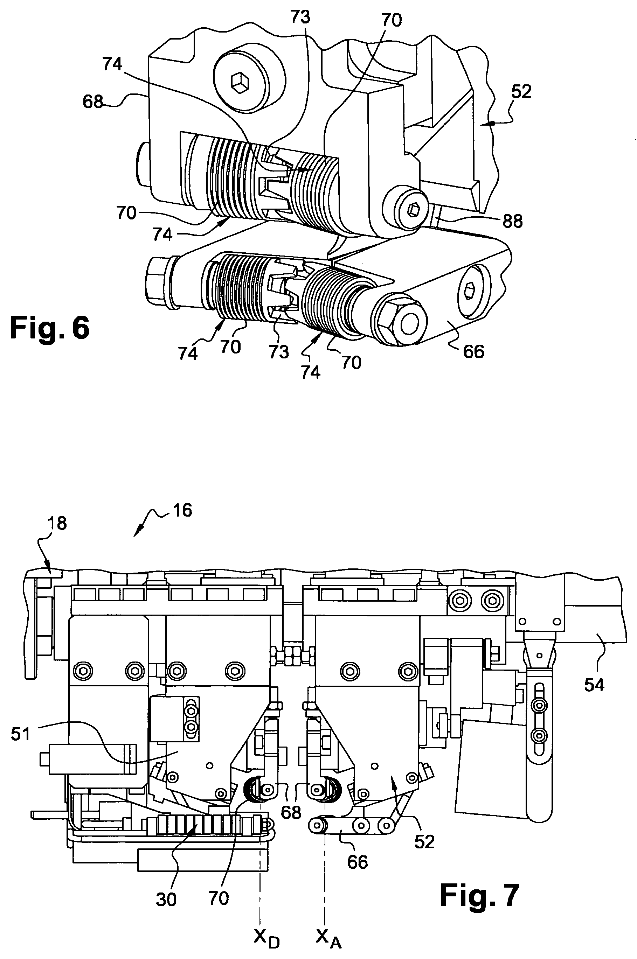

En référence aux figures 4 et 7, le dispositif 16 comprend en outre deux organes de fermeture ou d'assemblage 51 et 52. Chacun d'eux est monté coulissant par rapport au bâti 18 suivant la direction X. En l'espèce, les deux organes sont montés mobiles à coulissement sur un arbre commun 54 parallèle à la direction X et qui leur sert de support et de guide. Le dispositif 16 comprend en outre un coulisseau 56 monté mobile à coulissement sur un arbre 58 lui aussi parallèle à la direction X. Le coulisseau est rigidement relié à l'organe 51 de façon à l'immobiliser à rotation par rapport au bâti. Pareillement, un coulisseau 60 est monté mobile à coulissement sur un arbre 62 distinct des arbres 54 et 58 et parallèle à ceux-ci pour immobiliser l'organe 52 à rotation. Le dispositif 16 comprend des moyens d'entraînement du coulisseau 56 sur l'arbre 58 qui permettent de déplacer l'organe 51 par rapport à la direction X ainsi que des moyens d'entraînement du coulisseau 60 sur l'arbre 62 qui permettent de déplacer l'organe 52 par rapport à la direction X. Les moyens d'entraînement des deux organes sont indépendants, de même que ceux-ci.

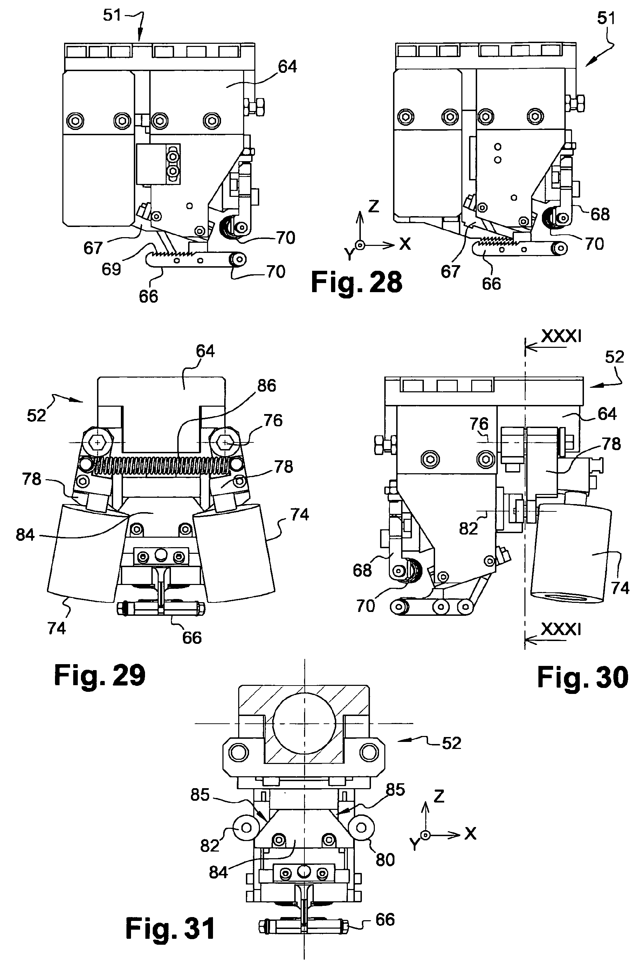

L'organe 51, comme illustré notamment aux figures 4 et 28, comprend un bâti 64 et une platine 66 de forme plate généralement parallèle aux directions X et Y et rigidement fixée au bâti 64. La platine présente une denture 69 sur sa face supérieure, dont les dents sont profilées suivant la direction Y, la platine formant ainsi un mors inférieur. L'organe 51 comprend un mors supérieur 67 monté mobile à coulissement vertical par rapport à la platine et pourvu d'une denture analogue sur sa face inférieure. Ces deux mors 66 et 67 qui peuvent venir en contact mutuel forment ainsi une pince.

L'organe 51 comprend en outre un étrier 68 monté coulissant suivant la direction Z par rapport au bâti 64. Une extrémité inférieure de l'étrier 68 s'étend en regard d'une extrémité avant de la platine 66. Chacune de ces extrémités porte une paire de molettes 70.

En référence aux figures 6 et 29 à 34, l'organe 52 présente une configuration similaire à celle de l'organe 51 mise à part que les dentures et le mors supérieur en sont absents. On y retrouve donc le bâti 64, la platine 66, l'étrier 68 et les molettes 70.

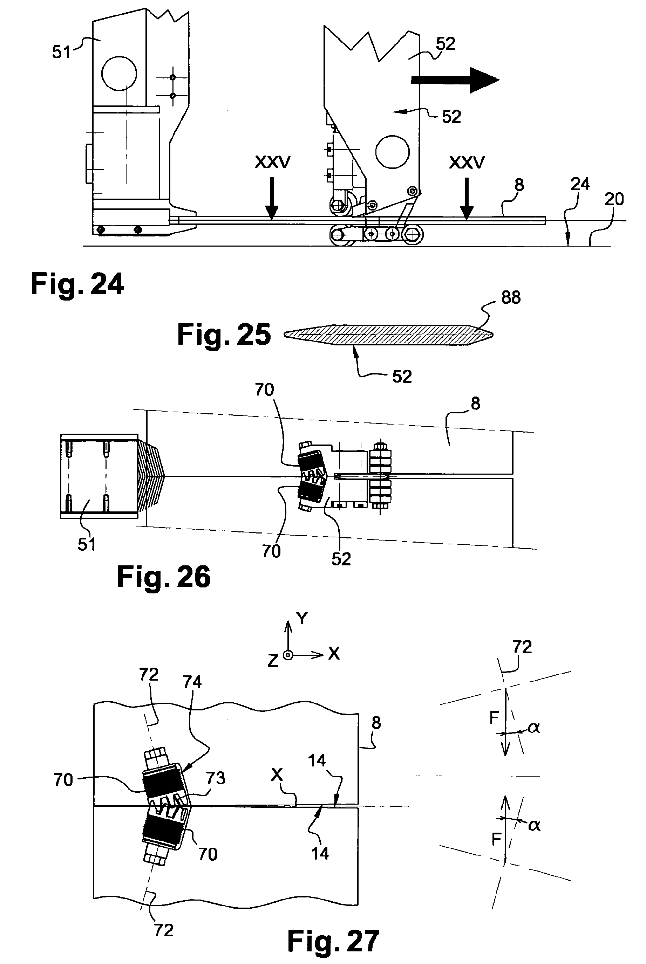

Dans chaque organe, les molettes sont disposées comme illustré notamment à la figure 27. Dans chaque paire, les molettes sont symétriques l'une de l'autre par rapport à un plan vertical parallèles aux axes X et Z. En l'espèce, les molettes de la paire supérieure sont plus grandes que les molettes de la paire inférieure. Elles sont chacune montées folles autour de leurs axes de rotation respectifs 72. Les deux axes 72 des molettes de chaque paire sont sécants dans le plan général de symétrie de l'organe. De plus, ces deux axes 72 s'étendent dans un plan horizontal commun parallèle à un plan tangent au tambour. Chaque axe 72 forme un angle α avec la direction horizontale Y. Les axes 72 des molettes inférieures sont parallèles aux axes respectifs des molettes supérieures. Dans chaque paire, les extrémités des molettes situées en regard forment un crabot 73 présentant des dentures au moyen desquelles les molettes sont en prise mutuelle de sorte que les molettes de chaque paire sont solidaires en rotation bien que ces rotations s'effectuent autour d'axes différents.

Chacune des molettes présente sur sa face circonférentielle une denture 74 dont les dents se succèdent suivant la direction parallèle à l'axe 72. Chaque dent est profilée suivant la direction circonférentielle de la molette. Les dents ont un profil triangulaire. Les dents sont toutes identiques entre elles et séparées les unes des autres par des distances égales.

A la différence de l'organe 51, l'organe 52, qui se situe devant le précédent par référence à la direction positive de l'axe X, porte du côté de son extrémité avant des aimants 74 s'étendant en regard du bâti. Les aimants sont orientés chacun de sorte que leur axe nord-sud est vertical ou sensiblement vertical. Ils sont disposés côte-à-côte en se succédant suivant la direction Y.

Via son extrémité supérieure, chaque aimant est monté mobile par rapport au bâti 64 à rotation autour d'un axe horizontal 76 parallèle à la direction X grâce à un bras 78. Les deux axes 76 des aimants s'étendant à la même hauteur par référence à l'axe Z. Chaque bras 78 porte une roulette 80 montée libre à rotation sur le bras autour d'un axe 82 parallèle à la direction X.

L'organe 52 comprend une came trapézoïdale 84 montée coulissante suivant le direction Z par rapport au bâti 64. Cette came présente deux rampes latérales 85 formant deux côtés opposés symétriques du trapèze, les rampes formant des faces parallèles à la direction Y et inclinées par rapport aux directions X et Z. Les roulettes 80 roulent sur les rampes respectives lors du coulissement de la came. L'organe 52 comprend des moyens de guidage et d'entraînement de la came par rapport au bâti qui n'ont pas été détaillés.

Lorsque la came occupe une position haute par rapport au bâti comme illustré aux figures 29 à 31, les roulettes s'étendent en partie basse des rampes 85, près de la base du trapèze qui en forme le plus long des deux côtés parallèles. Les deux roulettes 80 s'étendant du même côté des axes 82 que les aimants 74, il s'agit de la position dans laquelle les aimants sont éloignés l'un de l'autre, leur axe nord-sud étant incliné par rapport à la direction Z.

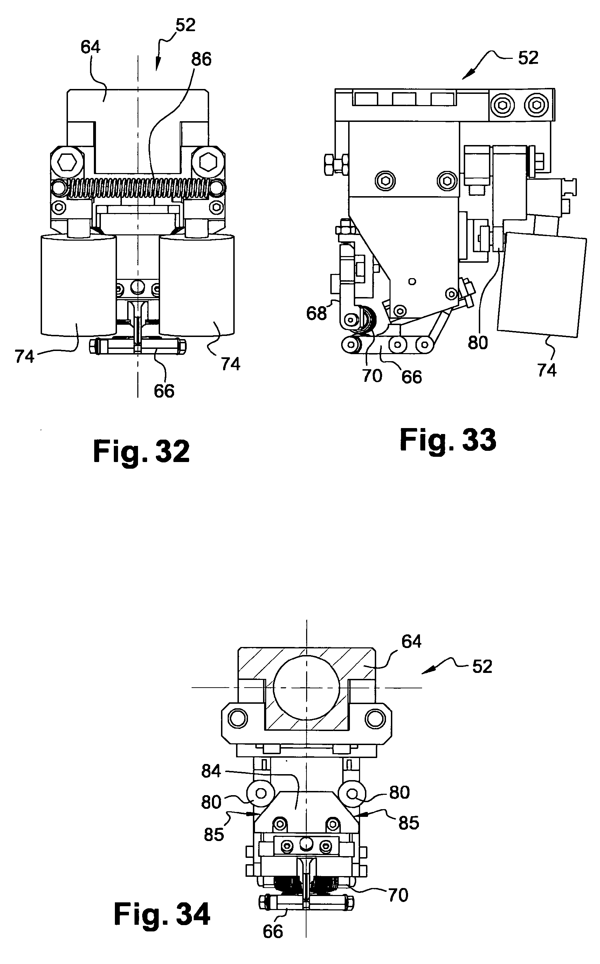

Dans la configuration des figures 32 à 34, la came 84 s'étend en position basse et les roulettes 80 en partie supérieure des rampes 85 en étant relativement proches l'une de l'autre. Il en est donc de même pour les aimants dont les axes nord-sud sont cette fois verticaux.

L'organe 52 comprend un élément de rappel 86 tel qu'un ressort dont les extrémités respectives sont fixées aux bras 78 et qui permet de maintenir les roulettes 80 en appui sur les rampes 85. La commande du mouvement de la came permet donc de commander celui des aimants.

L'organe 52 comprend un mécanisme de coordination des mouvements de la came 84 et de la semelle 66 si bien que la came 84 est en position haute lorsque la semelle est en position basse comme illustré aux figures 29 à 31 tandis que la came est en position basse lorsque la semelle est en position haute comme illustré aux figures 32 à 34.

Comme illustré aux figures 6, 24 et 25, chaque organe 51, 52 comprend une étrave 88 visible en section horizontale à la figure 25 et qui relie la platine 66 au bâti 64. Cette étrave présente une section horizontale de forme fuselée.

Les moyens de commande 17 du dispositif 16 commandent son fonctionnement de façon à mettre en oeuvre les étapes suivantes du procédé.

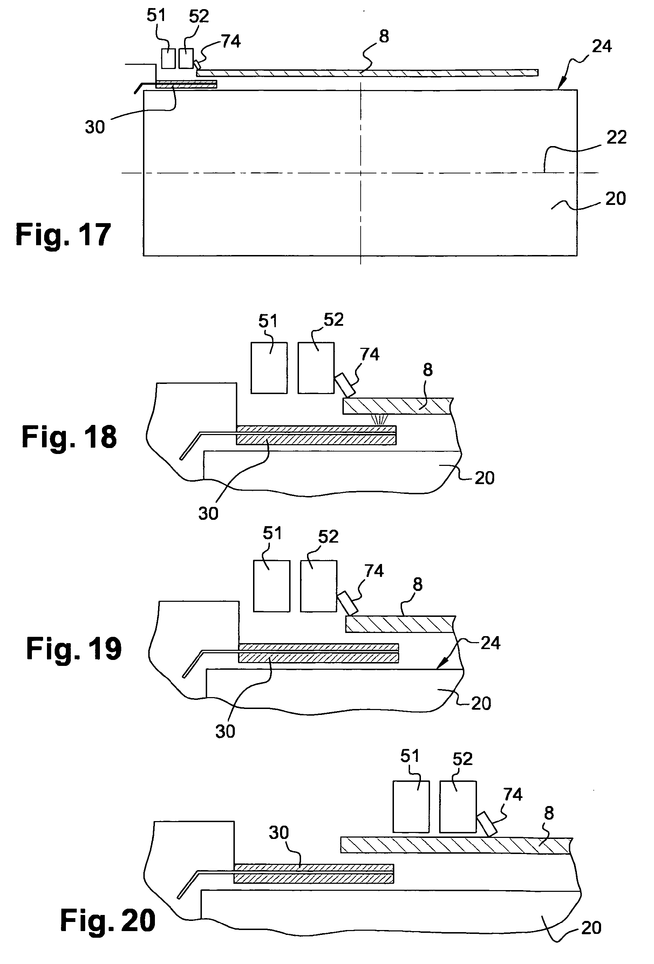

On se trouve dans la configuration des figures 15 et 16 avec la palette 30 interposée radialement entre la nappe et le tambour. Les organes 51 et 52 s'étendent à ce stade comme illustré à la figure 17 dans le même plan vertical que la palette mais en arrière de cette dernière par référence à la direction positive de l'axe X. Dans l'organe 51, la platine est baissée tandis que l'étrier est levé comme sur la partie gauche de la figures 28. Les aimants de l'organe 52 sont dans leur position rapprochée comme sur les figures 32 à 34. C'est la position dans laquelle leur extrémité inférieure est la plus proche du tambour.

Les moyens 17 commandent l'alimentation en air comprimé des deux orifices 48, 50 afin de soulever les extrémités de la nappe et de les éloigner de la palette. C'est l'étape illustrée à la figure 18. Ces extrémités se rapprochent donc des aimants 74. Simultanément, les moyens 17 commandent l'alimentation en courant des électro-aimants si bien que, sous l'effet de l'attraction magnétique exercée sur les torons 10, les extrémités de la nappe viennent au contact des extrémités inférieures des aimants. Une fois que ce contact a été réalisé, ces extrémités se trouvent maintenues dans cette position éloignée par rapport à la palette et les moyens 17 interrompent l'alimentation en air des orifices comme illustré à la figure 19.

Dans une telle configuration, si on déplace l'organe 52 suivant la direction X, l'extrémité inférieure des aimants risque de frotter contre la nappe. C'est pourquoi, comme le montrent les figures 29 à 31, on commande le passage de l'organe 52 dans l'autre configuration où les aimants sont éloignés l'un de l'autre, avec la platine baissée, pour maintenir écartées les deux extrémités de la nappe et permettre l'engagement de la nappe dans l'organe 52.

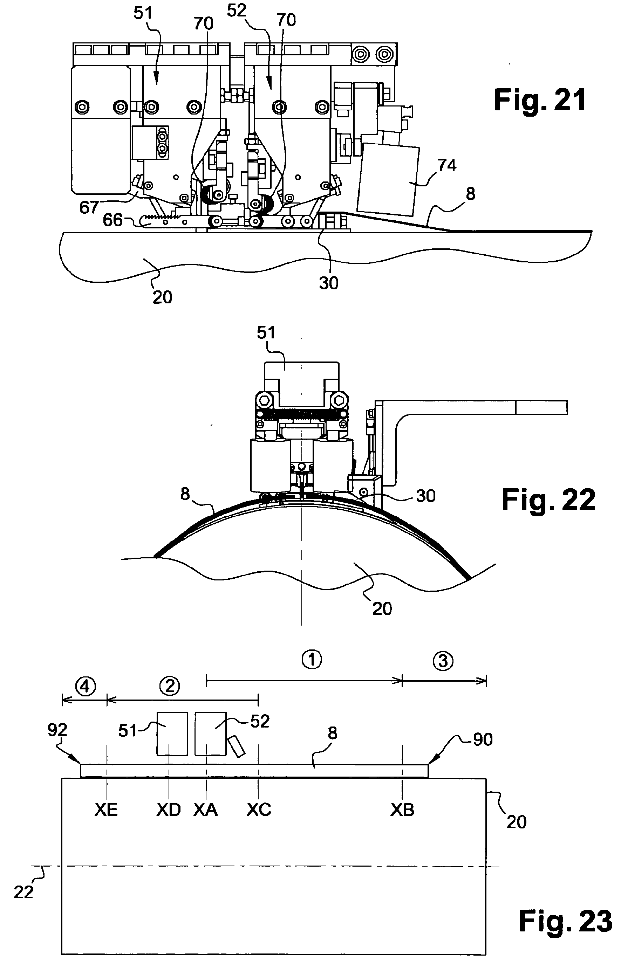

Les platines des deux organes se trouvant toutes les deux en position basse, les moyens 17 commandent le coulissement des organes 51, 52 vers l'avant suivant la direction X sans déplacer la palette comme illustré à la figure 20. Les platines 66 passant dans la gorge 44 entre les supports 40 et 42 et sous les extrémités 14 de la nappe tandis que le bâti 64 passe au-dessus de ces extrémités. Le coulissement se poursuit jusqu'à faire prendre aux organes 52 et 51 les positions respectives XA et XD illustrées à la figure 23. Il s'agit de deux positions médianes, c'est-à-dire distantes des bord latéraux 90, 92 de la nappe. La position XA est plus proche du bord distal 90 de la nappe que la position XD.

On commande ensuite le recul de la palette 30, suivant la direction négative de l'axe X, pour la mettre dans une position de stockage ou de garage où elle est éloignée du tambour et de la nappe. Ce sont maintenant les platines et les aimants qui maintiennent localement les extrémités de la nappe éloignées du tambour.

On commande ensuite la descente du mors 67 de l'organe arrière 51. Les extrémités de la nappe sont donc immobilisées localement dans la pince formée entre les deux dentures 69 comme en partie centrale de la figure 28. On commande en même temps la descente de l'étrier de l'organe avant 52 pour prendre en sandwich la nappe entre les deux paires de mollettes.

On débute ensuite l'aboutage, c'est-à-dire l'assemblage l'une à l'autre des deux extrémités de la nappe, avec l'organe 52. Pour cela, dans une première phase illustrée à la figure 23, on déplace vers l'avant le seul organe avant 52, suivant la direction positive de l'axe X, de la position XA à une position médiane XB s'étendant entre la position XA et le bord distal 90. Pendant ce déplacement, le tambour ainsi que l'organe 51 maintiennent la plus grande partie de la nappe immobile en position comme illustré aux figures 24 et 25.

Au cours de ce mouvement, l'aboutage se déroule comme suit en référence aux figures 26 et 27. Les dents de chacune des quatre molettes de l'organe 52 pénètrent de quelques dixièmes de millimètre dans la matrice en élastomère de deux zones des extrémités de la nappe, dans ses faces inférieure et supérieure. Le coulissement de l'organe 52 par rapport à la nappe suivant la direction X met en rotation par friction les molettes autour de leurs axes respectifs. Mais en raison de l'inclinaison des axes 72 par rapport à la trajectoire de l'organe 52, les dentures rapprochent l'une de l'autre les deux zones d'extrémité de la nappe de façon à les mettre en contact mutuel et à les presser l'une contre l'autre. Au cours du mouvement de la molette sur la nappe, sa denture exerce un effort F perpendiculaire à la direction X et à la direction des torons. Les efforts sont exercés par les molettes de chaque paire sur les extrémités respectives en sens contraires afin de les rapprocher. Compte tenu de l'état plastique de la gomme, ce contact suffit à assurer la soudure de la gomme sur elle même. De plus, les extrémités axiales de molettes formant le crabot viennent en contact avec les extrémités aboutées pour effectuer un laminage de la nappe améliorant le soudage des deux extrémités.

S'il arrive que les deux extrémités de la nappe avant le passage de l'organe 52 soient superposées l'une à l'autre, l'étrave 88 les sépare. En aval de cette dernière, les deux molettes assurent ensuite leur aboutage comme indiqué plus haut.

En d'autres termes, alors que l'organe 51 maintient une partie des extrémités de la nappe, l'organe 52 avançant suivant l'axe X met bout à bout un autre tronçon des extrémités et, en exerçant des forces en sens contraire sur celles-ci, réalise leur soudure.

En référence à la figure 23, une fois arrivé en position XB, l'organe 52 stoppe. La position XB s'étend par exemple à 10 mm du bord distal.

On commande la montée du mors supérieur de l'organe arrière 51 puis le déplacement de l'organe 51 vers l'avant de la position XD vers une position XC située entre les positions XA et XB. Au cours de ce trajet, l'organe 51 n'assemble pas les extrémités de la nappe.

Ensuite, on commande l'abaissement de l'étrier 68 de l'organe arrière 51, puis son recul jusqu'à une position médiane XE située entre la position XD et le bord proximal 92 de la nappe, sur le trajet 2. Au cours de ce mouvement, c'est cette fois l'organe avant 52 qui est immobile par rapport à la nappe pour la maintenir en position entre les deux paires de mollettes tandis que l'organe 51 assure la soudure des deux extrémités sur la partie de son trajet où elles n'ont pas été aboutées.

Sans s'arrêter à la position XE, l'organe 51 poursuit son recul jusqu'au bord d'extrémité proximal 92 sur la partie 4 du trajet. Lorsque l'organe 51 passe la position XE, l'organe 52 se remet en mouvement vers l'avant pour achever la fermeture de la nappe à partir de la position XB jusqu'au bord distal 90 sur le trajet 3. Les trajets 3 et 4 des organes 51 et 52 ont donc lieu simultanément en l'espèce. De manière alternative, on peut aussi provoquer l'arrêt de l'organe 51 à la position XE pour s'assurer que les deux organes 51 et 52 redémarrent bien de façon totalement synchrone et qu'ils lâchent la nappe carcasse exactement au même moment.

Les extrémités de la nappe ont donc été entièrement aboutées. Les deux organes 51 et 52 ne se trouvent plus en regard de la nappe. On peut alors remonter l'ensemble du dispositif servant à l'aboutage si des moyens à cette fin ont été prévus et évacuer la nappe du tambour.

On assemble ensuite la nappe et les autres constituants du pneumatique pour former une ébauche crue. Après achèvement, cette dernière fait l'objet d'une cuisson dans une presse en vue de la vulcanisation de la gomme.

Les moyens de commande sont des moyens informatiques comprenant un ou plusieurs ordinateurs dotés de processeurs, de mémoires, etc. Ils comprennent sous forme enregistrée un ou plusieurs programmes comprenant des instructions de code aptes à commander l'exécution de tout ou partie du procédé selon l'invention lorsqu'il est exécuté sur l'ordinateur.

Bien entendu, on pourra apporter à l'invention de nombreuses modifications sans sortir du cadre de celle-ci.

Il se peut que la ligne séparant les deux extrémités soit inclinée par rapport à la direction X tout comme les fils 10. On peut prévoir que cette inclinaison est mesurée par des moyens adaptés tels que des cellules ou une caméra 95, aptes à mesurer la radialité de la nappe par rapport au tapis 28, c'est-à-dire l'orientation des fils 10 de la nappe par rapport à sa direction de défilement sur ledit tapis. On peut prévoir que, en préalable à la séquence d'aboutage, le dispositif modifie son orientation angulaire pour compenser tout ou partie de cette différence. Cette rotation est par exemple effectuée lorsque les deux organes se trouvent respectivement aux positions XA et XD.

On peut également prévoir de donner un degré de liberté en rotation aux organes 51 et 52 autour de l'axe défini par l'arbre inférieur 54. On peut alors maintenir un contact de chacun de ces organes avec le tambour lors de l'aboutage, ce qui assure leur positionnement exact. On évite ainsi une configuration hyperstatique. Dans un tel cas, on rend flexible l'arbre supérieur 62.

La séquence d'aboutage pourra se dérouler différemment avec un ordre ou un nombre de trajets différents pour les organes 51, 52. On peut utiliser un seul de ces organes.

On pourra mettre en oeuvre indépendamment de la palette un procédé de réalisation d'une nappe carcasse de pneumatique de véhicule, la nappe étant enroulée sur un tambour et comprenant des renforts s'étendant dans des plans radiaux à un axe du tambour, procédé dans lequel au moins un organe d'assemblage monté mobile par rapport au tambour rapproche des extrémités de la nappe et les assemble tout en parcourant la nappe suivant une direction parallèle aux extrémités, avec ou sans toutes ses autres caractéristiques optionnelles.

## Revendications

1. Procédé de réalisation d'une nappe carcasse (8) de pneumatique (2) de véhicule, la nappe étant enroulée sur un tambour (20) et comprenant des renforts (10) s'étendant dans des plans radiaux à un axe (22) du tambour, au moins un organe d'assemblage (51, 52) monté mobile par rapport au tambour rapproche des extrémités (14) de la nappe et les assemble tout en parcourant la nappe suivant une direction (X) parallèle aux extrémités, le procédé étant **caractérisé en ce que**, avant l'assemblage, une palette (30) indépendante du ou de chaque organe d'assemblage s'étend entre le tambour et les extrémités sans s'étendre entre le tambour et le reste de la nappe.

2. Procédé selon la revendication précédente dans lequel on dispose la palette (30) sur le tambour et on enroule la nappe sur la palette et le tambour.

3. Procédé selon au moins l'une quelconque des revendications précédentes dans lequel on introduit la palette (30) suivant une direction circonférentielle à l'axe du tambour entre le tambour et une extrémité de la nappe enroulée sur le tambour.

4. Procédé selon au moins l'une quelconque des revendications précédentes dans lequel, avant l'assemblage, on éloigne les extrémités (14) par rapport au tambour, notamment par rapport à la palette, suivant une direction (Z) radiale à l'axe (22) du tambour par des moyens distincts du ou de chaque organe d'assemblage.

5. Procédé selon au moins l'une quelconque des revendications précédentes dans lequel, durant l'assemblage, on maintient les extrémités (14) éloignées du tambour, notamment de la palette, suivant une direction (Z) radiale à l'axe (22) du tambour par des moyens distincts du ou de chaque organe d'assemblage.

6. Procédé selon la revendication précédente dans lequel on effectue le maintien au moyen d'au moins un aimant (74) et on déplace le ou chaque aimant qui assure le maintien pour dégager un accès à l'organe d'assemblage (51, 52) pour les extrémités.

7. Procédé selon au moins l'une quelconque des revendications précédentes dans lequel les organes d'assemblage (51, 52) sont au nombre de deux et l'un d'eux est immobile par rapport au tambour et maintient la nappe pendant que l'autre effectue l'assemblage.

8. Procédé selon au moins l'une quelconque des revendications précédentes dans lequel, lors de l'assemblage, l'organe d'assemblage ou l'un des organes d'assemblage parcourt la nappe :
- à partir d'une première position (XA) dans un premier sens jusqu'à une deuxième position (XB), et
- à partir d'une troisième position (XC) située entre les première et deuxième positions dans un deuxième sens jusqu'à une quatrième position (XE) telle que la première position s'étend entre les troisième et quatrième positions.

9. Procédé selon la revendication précédente dans lequel, lors de l'assemblage, l'organe d'assemblage ou l'un des organes d'assemblage parcourt la nappe :
- à partir de la deuxième position (XB) jusqu'à un bord distal (90) des extrémités, et
- à partir de la quatrième position (XE) jusqu'à un bord proximal (92) des extrémités.

10. Procédé de réalisation d'un pneumatique **caractérisé en ce qu'**il met en oeuvre un procédé selon au moins l'une quelconque des revendications précédentes.

11. Dispositif (16) de fabrication d'une nappe carcasse de pneumatique de véhicule, comprenant un tambour (20), au moins un organe d'assemblage (51, 52) comprenant au moins une paire de molettes (70) montées rotatives autour d'axes respectifs sécants (72) définissant un plan parallèle à l'axe du tambour, des moyens aptes à guider l'organe d'assemblage à coulissement par rapport au tambour parallèlement à un axe (22) du tambour, le dispositif étant **caractérisé en ce qu'**il comprend une palette (30) montée mobile par rapport au tambour indépendamment du ou de chaque organe d'assemblage.

12. Dispositif selon la revendication précédente dans lequel la palette a une face concave (34) présentant une courbure identique à une courbure du tambour.

13. Dispositif selon au moins l'une quelconque des revendications 11 à 12 dans lequel la palette présente une face de base (33) et au moins une face de support (43, 45) toutes deux orientées en direction opposée à l'axe, la face de support étant située plus loin de l'axe que la face de base.

14. Dispositif selon les revendications 12 et 13 dans lequel la face de support (43) présente une arête commune (47) avec la face concave.

15. Dispositif selon au moins l'une quelconque des revendications 13 à 14 dans lequel la palette comprend au moins un organe (40) monté rotatif sur une base de la palette et formant la face de support (45) ou l'une des faces de support.

16. Dispositif selon au moins l'une quelconque des revendications 13 à 15 dans lequel les faces de support sont au nombre de deux et séparées l'une de l'autre par un espace libre (44) en direction circonférentielle à l'axe.

17. Dispositif selon au moins l'une quelconque des revendications 11 à 16 qui comprend des moyens (48, 50 ; 74), distincts du ou de chaque organe d'assemblage, pour éloigner des extrémités (14) d'une nappe carcasse enroulée sur le tambour par rapport au tambour, notamment par rapport à la palette, suivant une direction (Z) radiale à l'axe.

18. Dispositif selon la revendication précédente dans lequel les moyens d'éloignement comprennent des moyens (48, 50) de projection d'air, notamment à partir de la palette.

19. Dispositif selon au moins l'une quelconque des revendications 11 à 18 qui comprend des moyens (74), distincts du ou de chaque organe d'assemblage, pour maintenir des extrémités (14) d'une nappe carcasse enroulée sur le tambour éloignées du tambour, notamment de la palette, suivant une direction (Z) radiale à l'axe.

20. Dispositif selon au moins l'une quelconque des revendications 17 à 19 dans lequel les moyens d'éloignement et/ou de maintien comprennent au moins un aimant (74), le ou chaque aimant (74) étant de préférence porté par l'organe d'assemblage ou l'un des organes d'assemblage, le ou chaque aimant (74) étant par exemple monté mobile par rapport à un corps de l'organe d'assemblage entre une première position et une deuxième position plus éloignée des molettes que la première position.

21. Dispositif selon au moins l'une quelconque des revendications 11 à 20 dans lequel les paires de molettes (70) sont au nombre de deux dans le ou chaque organe d'assemblage et s'étendent en regard l'une de l'autre, de préférence en étant montées mobiles l'une par rapport à l'autre.

22. Dispositif selon au moins l'une quelconque des revendications 11 à 21 dans lequel les organes d'assemblage (51, 52) sont au moins au nombre de deux et montés mobiles par rapport au tambour parallèlement à l'axe (22) indépendamment l'un de l'autre.

23. Dispositif selon au moins l'une quelconque des revendications 11 à 22 dans lequel l'organe d'assemblage (51) ou l'un au moins des organes d'assemblage comprend deux mors distincts des molettes.

## Patentansprüche

1. Verfahren zur Herstellung einer Karkassenlage (8) eines Fahrzeug-Luftreifens (2), wobei die Lage auf eine Trommel (20) aufgewickelt ist und Verstärkungen (10) enthält, die sich in Ebenen radial zu einer Achse (22) der Trommel erstrecken, wobei mindestens ein Zusammenfügungsorgan (51, 52), das bezüglich der Trommel beweglich montiert ist, Enden (14) der Lage annähert und sie zusammenfügt, indem es die Lage gemäß einer Richtung (X) parallel zu den Enden durchquert, wobei das Verfahren **dadurch gekennzeichnet ist, dass** vor der Zusammenfügung eine Platte (30) unabhängig von dem oder jedem Zusammenfügungsorgan sich zwischen der Trommel und den Enden erstreckt, ohne sich zwischen der Trommel und dem Rest der Lage zu erstrecken.

2. Verfahren nach dem vorhergehenden Anspruch, wobei die Platte (30) auf der Trommel angeordnet und die Lage auf die Platte und die Trommel gewickelt wird.

3. Verfahren nach mindestens einem der vorhergehenden Ansprüche, wobei die Platte (30) gemäß einer Umfangsrichtung zur Achse der Trommel zwischen die Trommel und ein Ende der auf die Trommel aufgewickelten Lage eingeführt wird.

4. Verfahren nach mindestens einem der vorhergehenden Ansprüche, wobei vor der Zusammenfügung die Enden (14) bezüglich der Trommel, insbesondere bezüglich der Platte, gemäß einer Richtung (Z) radial zur Achse (22) der Trommel durch Einrichtungen entfernt werden, die sich von dem oder jedem Zusammenfügungsorgan unterscheiden.

5. Verfahren nach mindestens einem der vorhergehenden Ansprüche, wobei während der Zusammenfügung die Enden (14) von der Trommel, insbesondere der Platte, gemäß einer Richtung (Z) radial zur Achse (22) der Trommel durch Einrichtungen entfernt gehalten werden, die sich von dem oder jedem Zusammenfügungsorgan unterscheiden.

6. Verfahren nach dem vorhergehenden Anspruch, wobei der Halt mittels mindestens eines Magneten (74) durchgeführt wird, und der oder jeder Magnet, der den Halt gewährleistet, verschoben wird, um einen Zugang zum Zusammenfügungsorgan (51, 52) für die Enden freizulegen.

7. Verfahren nach mindestens einem der vorhergehenden Ansprüche, wobei es zwei Zusammenfügungsorgane (51, 52) gibt und eines von ihnen bezüglich der Trommel unbeweglich ist und die Lage hält, während das andere die Zusammenfügung durchführt.

8. Verfahren nach mindestens einem der vorhergehenden Ansprüche, wobei bei der Zusammenfügung das Zusammenfügungsorgan oder eines der Zusammenfügungsorgane die Lage durchquert:
- ausgehend von einer ersten Stellung (XA) in einer ersten Richtung bis zu einer zweiten Stellung (XB), und
- ausgehend von einer dritten Stellung (XC), die sich zwischen der ersten und der zweiten Stellung befindet, in einer zweiten Richtung bis zu einer vierten Stellung (XE) derart, dass die erste Stellung sich zwischen der dritten und der vierten Stellung erstreckt.

9. Verfahren nach dem vorhergehenden Anspruch, wobei bei der Zusammenfügung das Zusammenfügungsorgan oder eines der Zusammenfügungsorgane die Lage durchquert:
- ausgehend von der zweiten Stellung (XB) bis zu einem distalen Rand (90) der Enden, und
- ausgehend von der vierten Stellung (XE) bis zu einem proximalen Rand (92) der Enden.

10. Verfahren zur Herstellung eines Luftreifens, **dadurch gekennzeichnet, dass** es ein Verfahren nach mindestens einem der vorhergehenden Ansprüche anwendet.

11. Vorrichtung (16) zur Herstellung einer Karkassenlage eines Fahrzeug-Luftreifens, die eine Trommel (20), mindestens ein Zusammenfügungsorgan (51, 52), das mindestens ein Paar von Rändelrädern (70) enthält, die um jeweilige sich schneidende Achsen (72) drehbar montiert sind, die eine Ebene parallel zur Achse der Trommel definieren, und Einrichtungen enthält, die das Zusammenfügungsorgan bezüglich der Trommel parallel zu einer Achse (22) der Trommel gleitend führen können, wobei die Vorrichtung **dadurch gekennzeichnet** ist, das sie eine Platte (30) enthält, die bezüglich der Trommel unabhängig von dem oder jedem Zusammenfügungsorgan beweglich montiert ist.

12. Vorrichtung nach dem vorhergehenden Anspruch, wobei die Platte eine konkave Seite (34) hat, die eine Krümmung gleich einer Krümmung der Trommel hat.

13. Vorrichtung nach mindestens einem der Ansprüche 11 bis 12, wobei die Platte eine Basisseite (33) und mindestens einer Trägerseite (43, 45) aufweist, die beide in zur Achse entgegengesetzter Richtung ausgerichtet sind, wobei die Trägerseite sich weiter von der Achse entfernt befindet als die Basisseite.

14. Vorrichtung nach den Ansprüchen 12 und 13, wobei die Trägerseite (43) eine gemeinsame Kante (47) mit der konkaven Seite aufweist.

15. Vorrichtung nach mindestens einem der Ansprüche 13 bis 14, wobei die Platte mindestens ein Organ (40) enthält, das drehbar auf eine Basis der Platte montiert ist und die Trägerseite (45) oder eine der Trägerseiten bildet.

16. Vorrichtung nach mindestens einem der Ansprüche 13 bis 15, wobei es zwei Trägerseiten gibt, und sie voneinander durch einen Freiraum (44) in Umfangsrichtung zur Achse getrennt sind.

17. Vorrichtung nach mindestens einem der Ansprüche 11 bis 16, die von dem oder jedem Zusammenfügungsorgan unterschiedliche Einrichtungen (48, 50; 74) enthält, um Enden (14) einer auf die Trommel aufgewickelten Karkassenlage bezüglich der Trommel, insbesondere bezüglich der Platte, gemäß einer Richtung (Z) radial zur Achse zu entfernen.

18. Vorrichtung nach dem vorhergehenden Anspruch, wobei die Entfernungseinrichtungen Einrichtungen (48, 50) zur Lufteinspritzung, insbesondere ausgehend von der Platte, enthalten.

19. Vorrichtung nach mindestens einem der Ansprüche 11 bis 18, die Einrichtungen (74), die sich von dem oder jedem Zusammenfügungsorgan unterscheiden, enthält, um Enden (14) einer auf die Trommel aufgewickelten Karkassenlage von der Trommel, insbesondere von der Platte, in einer Richtung (Z) radial zur Achse entfernt zu halten.

20. Vorrichtung nach mindestens einem der Ansprüche 17 bis 19, wobei die Entfernungs- und/oder Halteeinrichtungen mindestens einen Magneten (74) enthalten, wobei der oder jeder Magnet (74) vorzugsweise von dem Zusammenfügungsorgan oder von einem der Zusammenfügungsorgane getragen wird, wobei der oder jeder Magnet (74) zum Beispiel bezüglich eines Körpers des Zusammenfügungsorgans zwischen einer ersten Stellung und einer zweiten Stellung beweglich montiert ist, die weiter von den Rändelrädern entfernt ist als die erste Stellung.

21. Vorrichtung nach mindestens einem der Ansprüche 11 bis 20, wobei es zwei Paare von Rändelrädern (70) in dem oder jedem Zusammenfügungsorgan gibt, die sich einander gegenüber erstrecken, vorzugsweise, indem sie zueinander beweglich montiert sind.

22. Vorrichtung nach mindestens einem der Ansprüche 11 bis 21, wobei es mindestens zwei Zusammenfügungsorgane (51, 52) gibt, die bezüglich der Trommel parallel zur Achse (22) unabhängig voneinander beweglich montiert sind.

23. Vorrichtung nach mindestens einem der Ansprüche 11 bis 22, wobei das Zusammenfügungsorgan (51) oder mindestens eines der Zusammenfügungsorgane zwei von den Rändelrädern verschiedene Backen enthält.

## Claims

1. Method for producing a carcass ply (8) for a vehicle tyre (2), the ply being wound onto a drum (20) and containing reinforcements (10) extending in planes that are radial to an axis (22) of the drum, at least one tyre-assembly member (51, 52), mounted in such a way that it is able to move in relation to the drum, brings the ends (14) of the ply together and assembles them by travelling over the ply in a direction (X) parallel to the ends, the method being **characterized in that**, prior to assembly, a blade (30) independent of the one or of each tyre-assembly member extends between the drum and the ends without extending between the drum and the rest of the ply.

2. Method according to the preceding claim, in which the blade (30) is arranged on the drum, and the ply is wound onto the blade and the drum.

3. Method according to at least any one of the preceding claims, in which the blade (30) is introduced in a direction circumferential to the axis of the drum between the drum and one end of the ply wound onto the drum.

4. Method according to at least any one of the preceding claims, in which, prior to assembly, the ends (14) are moved apart in relation to the drum, in particular in relation to the blade, in a direction (Z) radial to the axis (22) of the drum, by means that are separate from the one or from each tyre-assembly member.

5. Method according to at least one of the preceding claims, in which, during assembly, the ends (14) are retained at a distance from the drum, in particular from the blade, in a direction (Z) radial to the axis (22) of the drum, by means that are separate from the one or from each tyre-assembly member.

6. Method according to the preceding claim, in which the retention is effected by means of at least one magnet (74) and the one or each magnet which ensures the retention are displaced in order to make clearance available providing access to the tyre-assembly member (51, 52) for the ends.

7. Method according to at least one of the preceding claims, in which the tyre-assembly members (51, 52) are two in number, and one of them is stationary in relation to the drum and retains the ply, while the other carries out the assembly.

8. Method according to at least one of the preceding claims, in which, during assembly, the tyre-assembly member or one of the tyre-assembly members travels over the ply:
- from a first position (XA) in a first direction as far as a second position (XB), and
- from a third position (XC), situated between the first and second positions, in a second direction as far as a fourth position (XE), in such a way that the first position extends between the third and fourth positions.

9. Method according to the preceding claim, in which, during assembly, the tyre-assembly member or one of the tyre-assembly members travels over the ply:
- from the second position (XB) as far as one distal edge (90) of the ends, and
- from the fourth position (XE) as far as one proximal edge (92) of the ends.

10. Method for producing a tyre **characterized in that** it implements a method according to at least any one of the preceding claims.

11. Device (16) for manufacturing a carcass ply for a vehicle tyre, comprising a drum (20), at least one tyre-assembly member (51, 52) comprising at least one pair of ribbed rollers (70) mounted so as to rotate about respective intersecting axes (72) defining a plane parallel to the axis of the drum, means capable of guiding the tyre-assembly member in a sliding manner in relation to the drum parallel to one axis (22) of the drum, the device being **characterized in that** it comprises a blade (30) movably mounted in relation to the drum independently of the one or of each tyre-assembly member.

12. Device according to the preceding claim, in which the blade has a concave surface (34) exhibiting a curvature identical to a curvature of the drum.

13. Device according to at least any one of Claims 11 to 12, in which the blade exhibits a base surface (33) and at least one supporting surface (43, 45), both of which are oriented in the opposite direction to the axis, the supporting surface being situated further away from the axis than the base surface.

14. Device according to Claims 12 and 13, in which the supporting surface (43) exhibits a common edge (47) with the concave surface.

15. Device according to at least any one of Claims 13 to 14, in which the blade comprises at least one member (40) rotatably mounted on a base of the blade and forming the supporting surface (45) or one of the supporting surfaces.

16. Device according to at least any one of Claims 13 to 15, in which the supporting surfaces are two in number and are separated from one another by a free space (44) in a direction circumferential to the axis.

17. Device according to at least any one of Claims 11 to 16, which comprises means (48, 50; 74), separate from the one or from each tyre-assembly member, with the intention of distancing the ends (14) of a carcass ply wound onto the drum in relation to the drum, in particular in relation to the blade, in a direction (Z) radial to the axis.

18. Device according to the preceding claim, in which the means of distancing comprise means (48, 50) for blowing air, in particular from the blade.

19. Device according to at least any one of Claims 11 to 18, which comprises means (74), separate from the one or from each tyre-assembly member, intended to retain the ends (14) of a carcass ply wound onto the drum at a distance from the drum, in particular from the blade, in a direction (Z) radial to the axis.

20. Device according to at least any one of Claims 17 to 19, in which the means of distancing and/or of retention comprise at least one magnet (74), the one or each magnet (74) preferably being carried by the tyre-assembly member or one of the tyre-assembly members, the one or each magnet (74) being mounted, for example, in such a way that it is capable of movement in relation to a body of the tyre-assembly member between a first position and a second position further away from the ribbed rollers than the first position.

21. Device according to at least any one of Claims 11 to 20, in which the pairs of ribbed rollers (70) are two in number in the one or each tyre-assembly member and extend with regard to one another, preferably by being movably mounted in relation to one another.

22. Device according to at least any one of Claims 11 to 21, in which the tyre-assembly members (51, 52) are at least two in number and are movably mounted in relation to the drum parallel to the axis (22) independently of one another.

23. Device according to at least any one of Claims 11 to 22, in which the tyre-assembly member (51) or one at least of the tyre-assembly members comprises two jaws separate from the ribbed rollers.
